(19) Europäisches Patentamt
European Patent Office
Office européen des brevets

(11) Veröffentlichungsnummer: **0 321 820 A2**

(12) # EUROPÄISCHE PATENTANMELDUNG

(21) Anmeldenummer: **88120732.8**

(22) Anmeldetag: **12.12.88**

(51) Int. Cl.$^{4}$: **C08G 59/16 , C08G 59/14 , C08G 59/04 , G02B 6/00**

(30) Priorität: **23.12.87 DE 3743992**

(43) Veröffentlichungstag der Anmeldung: **28.06.89 Patentblatt 89/26**

(84) Benannte Vertragsstaaten: **DE FR GB IT**

(71) Anmelder: **Siemens Aktiengesellschaft Berlin und München**
**Wittelsbacherplatz 2**
**D-8000 München 2(DE)**

(72) Erfinder: **Birkle, Siegfried, Dr.**
**Veit-Stoss-Strasse 46**
**D-8552 Höchstadt(DE)**
Erfinder: **Feucht, Hans-Dieter, Dr.**
**Paul-Gossen-Strasse 34**
**D-8520 Erlangen(DE)**
Erfinder: **Kamps, Rainer, Dr.**
**Sauerbruchstrasse 9**
**D-8630 Coburg(DE)**
Erfinder: **Rissel, Eva-Maria**
**Lindenweg 19**
**D-8550 Forchheim(DE)**

(54) **Flüssiges, strahlenhärtbares Harz zur Sekundärbeschichtung von Lichtwellenleitern.**

(57) Zur Herstellung von Sekundärcoatings für Lichtwellenleiter werden Harze benötigt, die flüssig sind und aufgrund einer hohen Strahlenempfindlichkeit und einer Viskosität, die allenfalls den Zusatz relativ geringer Mengen an Verdünnungsmitteln erfordert, Sekundärcoatings ergeben, welche ein Einfriergebiet ≧ +60 °C besitzen und mit den Primärcoatings, insbesondere auf der Basis von Urethanacrylaten, verträglich sind.

Dies wird durch ein Harz erreicht, das ein Reaktionsprodukt von (Meth)acrylsäure bzw. -säurechlorid oder Isocyanatoalkyl-(meth)acrylat mit einem 1:2-Addukt aus einem Diepoxid mit einem mittleren Molekulargewicht ≦ 1000 und einem kurzkettigen $\alpha,\omega$-Diol mit einem mittleren Molekulargewicht ≦ 700 oder mit einem 1:2-Addukt aus einem Diepoxid mit einem mittleren Molekulargewicht ≦ 400 und einem einwertigen aliphatischen Alkohol mit einem mittleren Molekulargewicht ≦ 200 ist, wobei das Diepoxid ein aliphatisch-aromatischer oder aromatischer Diglycidylether, ein aliphatisches oder cycloaliphatisches Diepoxid oder ein siliciumorganisches Diepoxid ist, und wobei das kurzkettige $\alpha,\omega$-Diol ein $\alpha,\omega$-hydroxyterminiertes Polyoxyalkylen, ein $\alpha,\omega$-hydroxyterminierter Polyester, ein $\alpha,\omega$-hydroxyterminiertes Polybutadien, ein $\alpha,\omega$-hydroxyterminiertes organofunktionelles Polysiloxan oder ein $\alpha,\omega$-Alkandiol mit einem mittleren Molekulargewicht ≦ 200 ist.

LWL-Coatings

EP 0 321 820 A2

## Flüssiges, strahlenhärtbares Harz zur Sekundärbeschichtung von Lichtwellenleitern

Die Erfindung betrifft ein flüssiges, strahlenhärtbares Harz zur Sekundärbeschichtung von Lichtwellenleitern, ein daraus hergestelltes Sekundärcoating und einen Lichtwellenleiter mit diesem Sekundärcoating.

Lichtwellenleiter weisen im allgemeinen zwei Beschichtungen auf: Ein weiches Primärcoating und ein festes Sekundärcoating, wobei derzeit als Primärcoating überwiegend strahlengehärtete Urethanacrylate und als Sekundärcoating überwiegend strahlengehärtete Epoxyacrylate oder Urethanacrylate Verwendung finden (siehe beispielsweise: "Polym. Mater. Sci. Eng." Vol. 55, 1986, Seiten 536 bis 539). Die zur Beschichtung eingesetzten Harze müssen dabei nicht nur strahlenhärtbar sein, was eine schnelle und kostengünstige Härtung erlaubt, sondern sie müssen auch flüssig sein, d.h. im wesentlichen lösungsmittelfrei verarbeitet werden können, um Forderungen hinsichtlich des Umweltschutzes erfüllen zu können.

Die als Sekundärcoating eingesetzten Epoxy- und Urethanacrylate weisen ein ausreichend hohes Einfriergebiet auf ($T_g \geq + 60^\circ C$), sie sind darüber hinaus mit einem Primärcoating auf der Basis von Urethanacrylat kompatibel. Bei der Herstellung der Coatings ist aber auch wichtig, daß die entsprechenden Flüssigharze eine hohe Strahlenempfindlichkeit aufweisen, um eine hohe Aushärtungsgeschwindigkeit zu ermöglichen.

Aus "Chemical Abstracts" Vol. 106 (1987), Seite 7, Nr. 161368y beispielsweise ist ein Beschichtungsmaterial für optische Glasfasern auf Polyoxyalkylenbasis bekannt, das zur Herstellung von Sekundärcoatings dienen kann. Dieses Beschichtungsmaterial enthält Oligomere, die durch Umsetzung von hydroxyterminierten aliphatischen linearen Verbindungen, wie Polypropylenglykol, mit Diisocyanaten und Trishydroxyalkylisocyanurat-di(meth)acrylaten erhalten werden. Derartige Harze besitzen zwar pro Molekül mehr als zwei strahlenhärtbare Gruppen, so daß sie eine hohe Aushärtungsgeschwindigkeit aufweisen sollten, die Ankopplung der strahlenhärtbaren Gruppen über Bis-urethan-Strukturen (durch die Verwendung von Diisocyanaten) bringt aber eine hohe Viskosität mit sich. Es ist deshalb erforderlich, den bekannten Harzen große Mengen an Reaktivverdünner zuzusetzen, um sie als Beschichtungsmaterialien einsetzen zu können. Dies erfordert aber nicht nur einen zusätzlichen Aufwand, sondern ist auch mit anderen Nachteilen verbunden, wie hoher Dampfdruck der Reaktivverdünner.

Aufgabe der Erfindung ist es, ein flüssiges, strahlenhärtbares Harz anzugeben, das sich aufgrund einer hohen Strahlenempfindlichkeit und einer Viskosität, die allenfalls den Zusatz relativ geringer Mengen an Verdünnungsmitteln erfordert, zur Herstellung von Sekundärcoatings für Lichtwellenleiter eignet, welche ein Einfriergebiet $\geq + 60^\circ C$ besitzen und mit den Primärcoatings, insbesondere auf der Basis von Urethanacrylaten, verträglich sind.

Dies wird erfindungsgemäß dadurch erreicht, daß das Harz ein Reaktionsprodukt von (Meth)acrylsäure bzw. -säurechlorid oder Isocyanatoalkyl-(meth)acrylat mit einem 1:2-Addukt aus einem Diepoxid mit einem mittleren Molekulargewicht $\leq$ 1000 und einem kurzkettigen $\alpha,\omega$-Diol mit einem mittleren Molekulargewicht $\leq$700 oder mit einem 1:2-Addukt aus einem Diepoxid mit einem mittleren Molekulargewicht $\leq$ 400 und einem einwertigen aliphatischen Alkohol mit einem mittleren Molekulargewicht $\leq$ 200 ist, wobei das Diepoxid ein aliphatisch-aromatischer oder aromatischer Diglycidylether, ein aliphatisches oder cycloaliphati sches Diepoxid oder ein siliciumorganisches Diepoxid ist, und wobei das kurzkettige $\alpha,\omega$-Diol ein $\alpha,\omega$-hydroxyterminiertes Polyoxyalkylen, ein $\alpha,\omega$-hydroxyterminierter Polyester, ein $\alpha,\omega$-hydroxyterminiertes Polybutadien, ein $\alpha,\omega$-hydroxyterminiertes organofunktionelles Polysiloxan oder ein $\alpha,\omega$-Alkandiol mit einem mittleren Molekulargewicht $\leq$ 200 ist.

Das zur Herstellung des - dem erfindungsgemäßen Harz zugrundeliegenden - 1:2-Adduktes dienende Diepoxid kann, wie vorstehend ausgeführt, ein aliphatisch-aromatischer oder aromatischer Diglycidylether sein. Der aliphatisch-aromatische Diglycidylether kann dabei in der aliphatischen Kette vorteilhaft Heteroatome aufweisen, insbesondere Sauerstoffatome.

Als Diepoxide bzw. kurzkettige $\alpha,\omega$-Diole dienen vorzugsweise folgende Verbindungen:

- der Diglycidylether eines Bisphenol A-Propylenoxid-Adduktes (als aliphatisch-aromatischer Diglycidylether);
- Bisphenol A- oder Bisphenol F-Diglycidylether (als aromatischer Diglycidylether);
- 1.2.7.8-Diepoxyoctan (als aliphatisches Diepoxid);
- 3.4-Epoxycyclohexylmethyl-3'.4'-epoxycyclohexancarboxylat (als cycloaliphatisches Diepoxid);
- Bis-(3-glycidoxypropyl)-tetramethyldisiloxan (als siliciumorganisches Diepoxid);
- Polytetrahydrofuran, Polypropylenglykol oder ein Ethylenoxid-Tetrahydrofuran-Copolymer (als $\alpha,\omega$-hydroxyterminiertes Polyoxyalkylen);
- Polycaprolactondiol (als $\alpha,\omega$-hydroxyterminierter Polyester);
- 1.3-Bis-(4-hydroxybutyl)-tetramethyldisiloxan (als $\alpha,\omega$-hydroxyterminiertes organofunktionelles Polysiloxan);

- Ethylenglykol, 1.3-Propandiol, 1.4-Butandiol oder 1.10-Decandiol (als α,ω-Alkandiol).

1:2-Addukte, die durch Umsetzung von Diepoxiden (Formel I) mit α,ω-Diolen (Formel II) gebildet werden, besitzen eine Struktur entsprechend der allgemeinen Formel III:

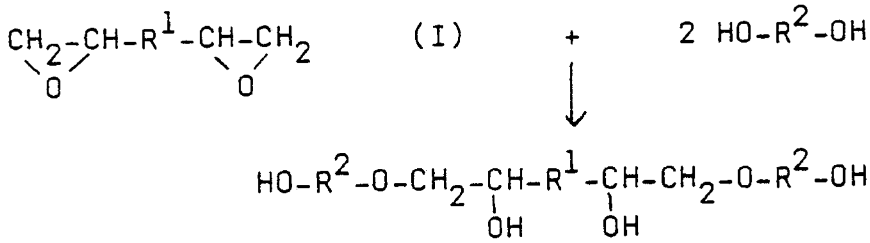

(I) (II) (III)

Cycloaliphatische Diepoxide ergeben dabei beispielsweise 1:2-Addukte entsprechend der allgemeinen Formel IV (sowie entsprechende Isomere):

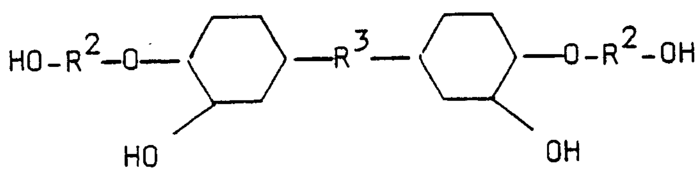

(IV)

1:2-Addukte, die durch Umsetzung von Diepoxiden (Formel V) mit einwertigen Alkoholen (Formel VI) gebildet werden, besitzen eine Struktur entsprechend der allgemeinen Formel VII:

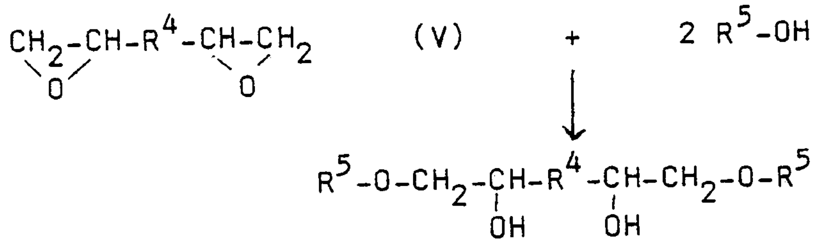

(V) (VI) (VII)

Zur Herstellung der 1:2-Addukte werden das Diepoxid und das Diol bzw. der einwertige Alkohol in einem niedrigsiedenden organischen Lösungsmittel (wie Trichlormethan) bei erhöhter Temperatur (< 80 °C) in Gegenwart eines sauren Katalysators (wie Trifluormethansulfonsäure) miteinander zur Reaktion gebracht. Das Verhältnis von Diepoxid zu Diol liegt dabei zwischen 1:2 und 1:6; auch der einwertige Alkohol kann im Überschuß eingesetzt werden, d.h. hierbei ist das Verhältnis 1:2 oder größer. Insbesondere bei der Umsetzung mit Diolen kann das Reaktionsprodukt - neben dem 1:2-Addukt - geringe Anteile an Oligomeren enthalten, beispielsweise folgender Struktur:

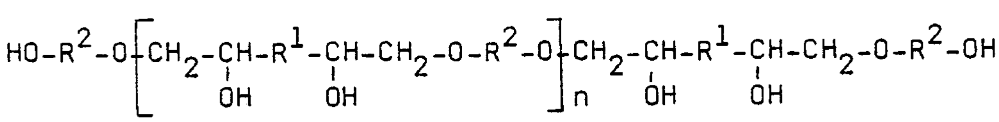

(IIIa)

Die 1:2-Addukte werden dann (a) mit Acrylsäure oder Methacrylsäure bzw. dem entsprechenden Säurechlorid oder (b) mit Isocyanatoalkyl-acrylat bzw. -methacrylat zur Reaktion gebracht, wobei - unter Ankopplung strahlenhärtbarer Gruppen - die strahlenhärtbaren Harze gebildet werden, und zwar in folgender Weise:

(a) 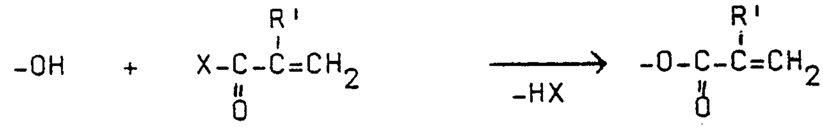

z.B. in (III) X = OH, Cl
R' = H, $CH_3$

(b) 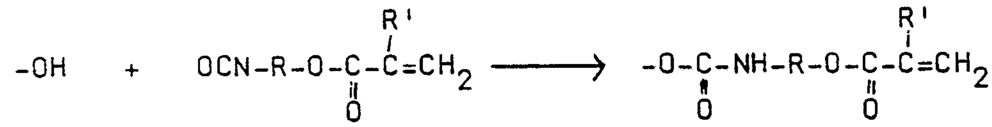

z.B. in (III) R = Alkylen
R' = H, $CH_3$

Die flüssigen, strahlenhärtbaren Harze nach der Erfindung eignen sich zur Herstellung von Sekundärcoatings, d.h. sie weisen die für diesen Zweck erforderliche Viskosität auf. Diese Harze besitzen ferner eine hohe Strahlenempfindlichkeit, die wiederum eine hohe Aushärtungsgeschwindigkeit bedingt. Die 1:2-Addukte aus Diepoxiden und Diolen ermöglichen dabei die Ankopplung von bis zu vier strahlenhärtbaren Gruppen pro Molekül, so daß die entsprechenden Harze hochempfindlich gegenüber Strah lung, wie UV-Strahlung, sind. Die aus den 1:2-Addukten von Diepoxiden und einwertigen Alkoholen gebildeten Harze besitzen pro Molekül zwar nur zwei strahlenhärtbare Gruppen, aufgrund des niedrigen Molekulargewichts ist jedoch je Volumeneinheit eine hohe Dichte an strahlenhärtbaren Gruppen vorhanden, so daß auch hier eine hohe Strahlungsempfindlichkeit und damit eine hohe Aushärtungsgeschwindigkeit gegeben ist.

Die aus den flüssigen, strahlenhärtbaren Harzen gemäß der Erfindung hergestellten Sekundärcoatings besitzen ein Einfriergebiet > + 60 °C. Ferner weisen diese Sekundärcoatings polare Gruppen auf und sind somit unter anderem mit Primärcoatings auf der Basis von Urethanacrylaten verträglich. Insbesondere zeigen die Sekundärcoatings nach der Erfindung eine gute Verträglichkeit mit den Primärcoatings, die in den deutschen Patentanmeldungen Akt.Z. P 37 43 990.1 - "Flüssiges, strahlenhärtbares Harz zur Primärbeschichtung von Lichtwellenleitern" und Akt.Z. P 37 43 873.5 - "Flüssiges, strahlenhärtbares Harz zur Beschichtung von Lichtwellenleitern" beschrieben sind.

Anhand von Ausführungsbeispielen soll die Erfindung noch näher erläutert werden.

Beispiel 1

In einen 1 l-Vierhalskolben (mit Rührer, Innenthermometer, Tropftrichter und Rückflußkühler mit Trokkenrohr) werden 300 g eines im Handel erhältlichen Polytetrahydrofurans mit einem mittleren Molekulargewicht von 650 (≙0,924 mol -OH) und 200 g trockenes Trichlormethan, stabilisiert mit 2-Methyl-buten-2, gegeben. Nach der Zugabe von ca. 1 ml Trifluormethansulfonsäure als Katalystor wird das Gemisch auf ca. 60 °C erwärmt, dann werden innerhalb von 30 min 78,5 g Bisphenol A-Diglycidylether (≙0,462 mol Epoxid), gelöst in 100 g trockenem Trichlormethan, unter Rühren zugetropft. Das Reaktionsgemisch wird anschließend bei 60 °C so lange gerührt, bis kein Epoxid mehr nachweisbar ist. Nach dem Abkühlen werden 10 g vernetztes Poly(4-vinylpyridin) zugesetzt und dann wird 6 h bei Raumtemperatur gerührt. Anschließend wird abgesaugt und danach über ein 0,8 µm-Membranfilter druckfiltriert. Das Lösungsmittel wird anschließend im Vakuum bei einer Badtemperatur von ca. 80 °C entf rnt. Es werden ca. 300 g eines 1:2-Adduktes aus dem Diepoxid und dem Polytetrahydrofuran in Form eines klaren, leicht gelblichen Öls erhalten (OH-Wert: 0,222 mol/100 g).

In einen 500 ml-Dreihalskolben (mit Innenthermometer, Tropftrichter, Trockenrohr und einem Magnetrührstäbchen) werden 100 g des in der vorstehend beschriebenen Weise erhaltenen 1:2-Adduktes, gelöst in 100 g trockenem Trichlormethan, gegeben. Nach der Zugabe von ca. 0,5 ml einer Dibutylzinndilauratlösung (10 g in 100 ml $CHCl_3$) als Katalysator werden 34,4 g Isocyanatoethyl-methacrylat (≙0,222 mol -NCO), gelöst in 30 g trockenem Trichlormethan, innerhalb von 30 min bei Raumtemperatur unter Rühren zugetropft; die Reaktionstemperatur soll dabei 30 °C nicht überschreiten. Das Reaktionsgemisch wird dann bei Raumtemperatur so lange gerührt, bis kein Isocyanat mehr nachweisbar ist. Anschließend wird das

Lösungsmittel im Vakuum bei einer Badtemperatur von 40° C entfernt. Es werden ca. 130 g eines klaren, leicht gelblichen Harzes mit einer Viskosität von ca. 14000 mPa.s (bei 23° C) erhalten.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare Folien erhalten, die eine Glasübergangstemperatur von 60° C besitzen.

Aus einer Probe des Harzes, die 2 Masse-% eines Photoinitiators auf Hydroxypropiophenon-Basis enthält, werden ca 500 µm starke Folien gegossen und mittels UV-Strahlung innerhalb von 30 s vollständig ausgehärtet (UV-Strahler mit einer Strahlungsintensität von 3 mW/cm$^2$). Die ausgehärteten Folien sind klar und fest, und sie besitzen eine Glasübergangstemperatur von 60° C. Die Folien eignen sich somit, ebenso wie die Folien der vorstehend genannten Art, als Sekundärcoating für Lichtwellenleiter.

Beispiel 2

Entsprechend Beispiel 1 werden 200 g eines im Handel erhältlichen Polytetrahydrofurans mit einem mittleren Molekulargewicht von 250 (≙1,6 mol -OH), gelöst in 150 g trockenem Trichlormethan, in Gegenwart von ca. 1 ml Trifluormethansulfonsäure mit 136 g Bisphenol A-Diglycidylether (≙0,8 mol Epoxid), gelöst in 100 g trockenem Trichlormethan, zur Reaktion gebracht. Das Reaktionsgemisch wird dann entsprechend Beispiel 1 weiterbehandelt und aufgearbeitet. Es werden ca. 315 g eines 1:2-Adduktes aus dem Diepoxid und dem Polytetrahydrofuran in Form eines klaren, leicht gelblichen Öls erhalten (OH-Wert: 0,469 mol/100 g).

100 g des in der vorstehend beschriebenen Weise erhaltenen 1:2-Adduktes, gelöst in 100 g trockenem Trichlormethan, werden entsprechend Beispiel 1 in Gegenwart von ca. 0,5 ml einer Dibutylzinndilauratlösung innerhalb einer Stunde mit 72,8 g Isocyanatoethyl-methacrylat (≙0,469 mol -NCO), gelöst in 50 g trockenem Trichlormethan, zur Reaktion gebracht. Das Reaktionsgemisch wird dann entsprechend Beispiel 1 weiterbehandelt und aufgearbeitet. Es werden ca. 170 g eines klaren, leicht gelblichen Harzes mit einer Viskosität von ca. 11000 mPa.s (bei 23° C) erhalten.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare Folien erhalten, die eine Glasübergangstemperatur von 72° C besitzen. Die Folien eignen sich somit als Sekundärcoating für Lichtwellenleiter.

Beispiel 3

In einem 1 l-Dreihalskolben (mit Rührer, Innenthermometer und Tropftrichter mit Trockenrohr) werden 286 g 1.4-Butandiol (≙ 6,3 mol -OH) in Gegenwart von ca. 0,5 ml Trifluormethansulfonsäure innerhalb einer Stunde mit 500 g eines im Handel erhältlichen Diglycidylethers eines Bisphenol A-Propylenoxid-Adduktes mit einem mittleren Molekulargewicht von 750 (≙1,05 mol Epoxid) zur Reaktion gebracht. Das Reaktionsgemisch wird dann entsprechend Beispiel 1 weiterbehandelt, wobei nach der Zugabe des Poly(4-vinylpyridins) 2 h bei Raumtemperatur gerührt wird. Dann wird das Reaktionsgemisch über ein 8 µm-Membranfilter druckfiltriert. Das überschüssige 1.4-Butandiol wird anschliessend im Vakuum (Druck: ≦ 0,4 mbar) bei einer Temperatur von ca. 75° C entfernt. Es werden ca. 475 g eines 1:2-Adduktes aus dem Diepoxid und dem Butandiol in Form eines klaren, zähflüssigen Öls erhalten (OH-Wert: 0,375 mol/100 g).

In einem 250 ml-Dreihalskolben (mit Rührer, Innenthermometer und Tropftrichter mit Trockenrohr) werden 100 g des in der vorstehend beschriebenen Weise erhaltenen 1:2-Adduktes in Gegenwart von ca. 0,1 ml einer Dibutylzinndilauratlösung entsprechend Beispiel 1 mit 58,2 g Isocyanatoethyl-methacrylat (≙0,375 mol -NCO) zur Reaktion gebracht. Das Reaktionsgemisch wird dann entsprechend Beispiel 1 weiterbehandelt und aufgearbeitet. Es werden ca. 150 g eines klaren, zähflüssigen Harzes mit einer Viskosität von ca. 75000 mPa.s (bei 25° C) erhalten.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare Folien erhalten, die eine Glasübergangstemperatur von 73° C besitzen. Die Folien eignen sich somit als Sekundärcoating für Lichtwellenleiter.

Beispiel 4

Entsprechend Beispiel 1 werden 74 g 1-Butanol (≙1 mol -OH), gelöst in 500 g trockenem Trichlormethan, in Gegenwart von ca. 0,5 ml Trifluormethansulfonsäure mit 181 g Bis-(3-glycidoxypropyl)-tetramethyldisiloxan (≙0,5 mol Epoxid), gelöst in 500 g trockenem Trichlormethan, zur Reaktion gebracht. Das Reaktionsgemisch wird anschließend bei 60 °C so lange gerührt, bis ein Restepoxidgehalt < 0.5 % erreicht ist. Das Lösungsmittel wird dann im Vakuum bei einer Badtemperatur von ca. 60 °C entfernt. Es werden ca. 226 g eines 1:2-Adduktes aus dem Butanol und dem siliciumorganischen Diepoxid in Form eines klaren Öls erhalten (OH-Wert: 0,306 mol/100 g).

Entsprechend Beispiel 1 werden 100 g des in der vorstehend beschriebenen Weise erhaltenen 1:2-Adduktes, gelöst in 150 g trockenem Trichlormethan, in Gegenwart von ca. 0,5 ml Dibutylzinndilaurat innerhalb von 90 min mit 47,5 g Isocyanatoethyl-methacrylat (≙0,306 mol -NCO), gelöst in 50 g trockenem Trichlormethan, zur Reaktion gebracht. Das Reaktionsgemisch wird dann entsprechend Beispiel 1 weiterbehandelt und aufgearbeitet. Es werden ca. 145 g eines klaren, farblosen Harzes mit einer Viskosität von ca. 1100 mPa.s (bei 23 °C) erhalten.

Aus einer Probe des Harzes werden ca. 300 µm starke Folien gegossen und unter Stickstoff mit Elektronenstrahlen vollständig ausgehärtet (Beschleunigungsspannung: 1 MeV; Dosis: 25 kGy). Es werden elastische, reißfeste, biegbare Folien erhalten, die eine Glasübergangstemperatur von 56 °C besitzen. Die Folien eignen sich somit als Sekundärcoating für Lichtwellenleiter.

## Ansprüche

1. Flüssiges, strahlenhärtbares Harz zur Sekundärbeschichtung von Lichtwellenleitern, **dadurch gekennzeichnet,** daß es ein Reaktionsprodukt von (Meth)acrylsäure bzw. -säurechlorid oder Isocyanatoalkyl-(meth)acrylat mit einem 1:2-Addukt aus einem Diepoxid mit einem mittleren Molekulargewicht ≦ 1000 und einem kurzkettigen $\alpha,\omega$-Diol mit einem mittleren Molekulargewicht ≦ 700 oder mit einem 1:2-Addukt aus einem Diepoxid mit einem mittleren Molekulargewicht ≦ 400 und einem einwertigen aliphatischen Alkohol mit einem mittleren Molekulargewicht ≦ 200 ist, wobei das Diepoxid ein aliphatisch-aromatischer oder aromatischer Diglycidylether, ein aliphatisches oder cycloaliphatisches Diepoxid oder ein siliciumorganisches Diepoxid ist, und wobei das kurzkettige $\alpha,\omega$ -Diol ein $\alpha,\omega$ -hydroxyterminiertes Polyoxyalkylen, ein $\alpha,\omega$-hydroxyterminierter Polyester, ein $\alpha,\omega$-hydroxyterminiertes Polybutadien, ein $\alpha,\omega$-hydroxyterminiertes organofunktionelles Siloxan oder ein $\alpha,\omega$-Alkandiol mit einem mittleren Molekulargewicht ≦ 200 ist.

2. Flüssiges, strahlenhärtbares Harz nach Anspruch 1, **dadurch gekennzeichnet,** daß der aliphatisch-aromatische Diglycidylether in der aliphatischen Kette Heteroatome, insbesondere Sauerstoffatome, aufweist.

3. Flüssiges, strahlenhärtbares Harz nach Anspruch 1 oder 2, **dadurch gekennzeichnet,** daß das Diepoxid der Diglycidylether eines Bisphenol A-Propylenoxid-Adduktes, Bisphenol A-oder Bisphenol F-Diglycidylether, 1.2.7.8-Diepoxyoctan, 3.4-Epoxycyclohexylmethyl-3′.4′-epoxycyclohexancarboxylat oder Bis-(3-glycidoxypropyl)-tetramethyldisiloxan ist.

4. Flüssiges, strahlenhärtbares Harz nach einem der Ansprüche 1 bis 3, **dadurch gekennzeichnet,** daß das kurzkettige $\alpha,\omega$-Diol Polytetrahydrofuran, Polypropylenglykol, ein Ethylenoxid-Tetrahydrofuran-Copolymer, Polycaprolactondiol, 1.3-Bis-(4-hydroxybutyl)-tetramethyldisiloxan, Ethylenglykol, 1.3-Propandiol, 1.4-Butandiol oder 1.10-Decandiol ist.

5. Sekundärcoating für Lichtwellenleiter, **dadurch gekennzeichnet,** daß es aus wenigstens einem strahlengehärteten Harz nach einem oder mehreren der Ansprüche 1 bis 4 besteht.

6. Lichtwellenleiter, **gekennzeichnet** durch ein Sekundärcoating nach Anspruch 5.